# EUROPÄISCHE PATENTSCHRIFT

(11) **EP 4 165 703 B1**
(45) Veröffentlichungstag und Bekanntmachung des Hinweises auf die Patenterteilung: **08.05.2024**
(21) Anmeldenummer: 21802611.0
(22) Anmeldetag: 25.10.2021
(51) Int. Cl.: H01M 8/0202, H01M 8/0258, H01M 8/0265, H01M 8/0267, H01M 8/24, H01M 8/04089, H01M 8/04746, H01M 8/2483

(54) **BIPOLARPLATTE MIT EINSETZBARER BLENDE UND BRENNSTOFFZELLENSTAPEL**
BIPOLAR PLATE WITH AN INSERTABLE DIAPHRAGM, AND FUEL CELL STACK
PLAQUE BIPOLAIRE AVEC OBTURATEUR INSÉRABLE ET EMPILEMENT DE CELLULES ÉLÉMENTAIRES

(30) Priorität: 30.10.2020 DE 102020128562
(43) Veröffentlichungstag der Anmeldung: 19.04.2023
(73) Patentinhaber: AUDI AG, 85057 Ingolstadt (DE)
(72) Erfinder: GRETZER, Markus, 85072 Eichstätt (DE); KLUY, Norbert, 85132 Schönfeld (DE)
(74) Vertreter: Hentrich Patent- & Rechtsanwaltspartnerschaft mbB
(86) Internationale Anmeldenummer: PCT/EP2021/079521
(87) Internationale Veröffentlichungsnummer: WO 2022/090143

(56) Entgegenhaltungen:
- EP-A1- 3 336 949
- EP-A2- 1 796 196
- ES-T3- 2 640 047

## Beschreibung

Die Erfindung betrifft eine Bipolarplatte für eine Brennstoffzelle mit einem aktiven Bereich und einem den aktiven Bereich umgebenen Randbereich, dem ein einen ersten Durchtritt aufweisende erste Medienführung und ein einen zweiten Durchtritt aufweisende zweite Medienführung zugeordnet ist. Weiterhin ist ein durch den aktiven Bereich verlaufender den ersten Durchtritt mit dem zweiten Durchtritt strömungsmechanisch verbindender Medienkanal vorhanden.

Die Erfindung betrifft darüber hinaus einen Brennstoffzellenstapel mit mindestens einer Bipolarplatte.

Brennstoffzellenvorrichtungen werden für die chemische Umsetzung eines Brennstoffs mit Sauerstoff zu Wasser genutzt, um elektrische Energie zu erzeugen. Hierfür enthalten Brennstoffzellen als Kernkomponente die sogenannte Membran-Elektroden-Einheit (MEA für membrane electrode assembly), die ein Verbund aus einer protonenleitenden Membran und jeweils einer, beidseitig an der Membran angeordneten Elektrode (Anode und Kathode) ist. Zudem können Gasdiffusionslagen (GDL) beidseitig der Membran-Elektroden-Einheit an den der Membran abgewandten Seiten der Elektroden angeordnet sein. Im Betrieb der Brennstoffzellenvorrichtung mit einer Mehrzahl zu einem Brennstoffzellenstapel zusammengefasster Brennstoffzellen wird der Brennstoff, insbesondere Wasserstoff H₂ oder ein wasserstoffhaltiges Gasgemisch der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet. Gleichzeitig reagieren im Kathodenraum diese Sauerstoffanionen mit den über die Membran transportierten Protonen unter Bildung von Wasser.

Den Elektroden der Brennstoffzellen werden mittels Bipolarplatten die Reaktantengase zugeführt. Zusätzlich zu den Reaktantengasen wird auch ein Kühlmedium durch die Bipolarplatten durchgeführt, so dass auf kleinstem Raum drei verschiedene Medien durch die Bipolarplatten geführt werden.

Um hohe Leistungsanforderungen erfüllen zu können, werden mehrere Brennstoffzellen zu einem Brennstoffzellenstapel zusammengefasst bzw. übereinander gestapelt. Die Medienführung kann dabei als in dem Randbereich als Aussparungen gebildete Medienports ausgebildet sein, die beim Übereinanderstapeln der einzelnen Schichten des Brennstoffzellenstapels mehrere dreidimensionale Räume entstehen lassen. Alternativ kann die Medienführung auch als ein dem Randbereich der Bipolarplatten und der Brennstoffzellen zugeordneter und separat davon ausgebildetes Funktionsbauteil gebildet sein, in dem ein dreidimensionaler Raum gebildet ist. In anderen Worten kann den übereinander gestapelten Brennstoffzellen und Bipolarplatten ein externer Header zugeordnet sein. So werden mehrere dreidimensionale Räume entlang der Stapelrichtung zur Zuführung der Reaktanden und des Kühlmediums in den aktiven Bereich der Brennstoffzellen und mehrere dreidimensionale Räume entlang der Stapelrichtung zur Abführung der Reaktanden und der Produkte sowie des Kühlmediums gebildet. Durch den aktiven Bereich der Bipolarplatte ist typischerweise eine Kanalstruktur aus Medienkanälen gebildet, die einen der Medienführungen, beispielsweise einen Medienport, mit einem anderen der Medienführungen strömungsmechanisch verbindet. In den Bipolarplattenkörper der Bipolarplatte ist dabei mindestens ein Durchtritt realisiert, der die Medienführung, beispielsweise den Medienport mit dem oder den Medienkanälen strömungsmechanisch verbindet.

Der Wirkungsgrad der Brennstoffzelle wird dabei durch den Medienmassenstrom, der durch die Medienkanäle fließt, maßgeblich beeinflusst. Dieser wird zu einem erheblichen Teil mit der Wahl des Strömungsquerschnitts, d.h. des Durchmessers der Durchtritte, bei der Fertigung der Bipolarplatte festgelegt. Die Wahl des Durchmessers stellt dabei ein Kompromiss verschiedener Anforderungen an die Befeuchtung und die Leistungserbringung dar der Brennstoffzelle dar. Eine rasche Anpassung des Leistungsprofils des Brennstoffzellenstapels während des Betriebs ist dadurch erschwert.

Weiterhin ist eine gleichmäßige Verteilung der Reaktanden innerhalb eines Brennstoffzellenstapels erwünscht, um alle Brennstoffzellen optimal mit Feuchtigkeit und mit Brennstoff zu versorgen. Dazu wird in der DE 10 2014 22 06 82 A1 eine Bipolarplatte mit mehreren Medienports beschrieben, die eine Sammelleitung bilden, wobei in die Sammelleitung ein Einlegeelement einsetzbar ist. Dieses Einlegeelement verändert den Querschnitt der Sammelleitung abschnittsweise um jede der Brennstoffzellen innerhalb des Brennstoffzellenstapels mit dem gleichen Volumenstrom an Medien zu versorgen. Die DE 10 2016 225 444 A1 beschreibt ebenfalls eine Separatorplatte mit mehreren Medienports, die eine Sammelleitung bilden, in die jeweils ein Einlegeelement einlegbar ist, wobei das Einlegeelement mehrere Aussparungen aufweist. Auch dies ermöglicht den Querschnitt der Sammelleitung für die verschiedenen Brennstoffzellen anzupassen. Die CN 207 690 923 U beschreibt ebenfalls eine Bipolarplatte mit einem Medieneinlasskanal in den ein Einsatzelement angeordnet ist.

Die EP 1 796 196 A2 beschreibt eine Bipolarplatte für eine Brennstoffzelle mit einem aktiven Bereich und einem den aktiven Bereich umgebenden Randbereich, dem eine mit einem ersten Durchtritt strömungsmechanisch verbundene erste Medienführung und eine mit einem zweiten Durchtritt strömungsmechanisch verbundene zweite Medienführung zugeordnet ist, sowie mit einem durch den aktiven Bereich verlaufenden, den ersten Durchtritt mit dem zweiten Durchtritt strömungsmechanisch verbindenden Medienkanal, wobei zumindest einer der Medienführungen eine erste Teilkammer und den Durchtritt umfasst, und eine Blende in die erste Teilkammer und/oder in den Durchtritt einsetzbar oder eingesetzt ist.

Nachteilig hierbei ist das die Querschnittsform des Einlegelements, entweder an die Querschnittsform der Medienports angepasst werden muss, was zu einem hohen Materialverbrauch führt, oder eine separate Führung für das Einlegeelement vorhanden sein muss. Dies erhöht den Materialaufwand sowie die Anzahl der Fertigungsschritte für die Bipolarplatte und damit auch für den Brennstoffzellenstapel.

Daher ist es Aufgabe der vorliegenden Erfindung eine Bipolarplatte und einen Brennstoffzellenstapel bereit zu stellen, bei denen die oben genannten Nachteile reduziert werden.

Die die Bipolarplatte betreffende Aufgabe wird durch eine Bipolarplatte mit den Merkmalsbestand des Anspruchs 1 gelöst. Die den Brennstoffzellenstapel betreffende Aufgabe wird durch einen Brennstoffzellenstapel mit den Merkmalsbestand des Anspruchs 10 gelöst. Vorteilhafte Ausgestaltungen mit zweckmäßigen Weiterbildungen der Erfindung sind in den abhängigen Ansprüchen angegeben.

Die Bipolarplatte zeichnet sich dadurch aus, dass zumindest einer der Medienführungen eine erste Teilkammer und eine den Durchtritt aufweisende zweite Teilkammer umfasst, dass zwischen der ersten Teilkammer und der zweiten Teilkammer ein Strömungsquerschnitt der Medienführung verjüngt ausgebildet ist, und dass in die zweite Teilkammer eine Blende einsetzbar oder eingesetzt ist. Die zweite Teilkammer des Medienführung dient somit der Aufnahme und Führung der Blende. Auf ein zusätzliches Führelement oder eine zusätzliche Führung der Blende kann somit verzichtet werden. Dies reduziert den Materialverbrauch und vereinfacht der Fertigung der Bipolarplatte.

Insbesondere ist es vorteilhaft, wenn die Blende mittels eines Aktuators innerhalb der zweiten Teilkammer verstellbar gelagert ist zur Einstellung eines Strömungsquerschnitts des Durchtritts. Die Blende ist somit nicht nur in der zweiten Teilkammer geführt, sondern kann innerhalb der zweiten Teilkammer verstellt werden, sodass eine zumindest teilweise Abdeckung des Durchtritts und eine Reduzierung des Strömungsquerschnitt erreicht werden kann. Die mittels des Aktuators verstellbare Blende ermöglicht dabei eine dynamische Einstellung des Strömungsquerschnitts am Durchtritt, was wiederum die Massenströme in dem Medienkanal nach Bedarf regelt. Die Blende ist dabei vorzugsweise verstellbar zwischen einer ersten Position, in der der Durchtritt zumindest teilweise abgedeckt ist, der Strömungsquerschnitt folglich reduziert ist, und einer zweiten Position, in der der Durchtritt unbedeckt ist. Die Blende kann dabei auch derart durch den Aktuator verstellt werden, dass der Durchtritt vollständig durch die Blende abgedeckt ist, so dass ein Medienmassenstrom durch den Durchtritt in den Medienkanal verhindert wird. Diese rasche Reduktion der Medienzufuhr führt dazu, dass nur noch die Medien, die sich innerhalb des aktiven Bereichs befinden, für die elektrochemische Reaktion zur Verfügung stehen. Dies erlaubt ein schnelles Verringern der elektrischen Leistungsbereitstellung des Brennstoffzellenstapels, um in Fahrzeugen auf dynamische Vorgänge, beispielsweise das Eingreifen eines Antiblockiersystems reagieren zu können. Umgekehrt kann auch eine rasche Leistungssteigerung realisiert werden, oder die Medienführung derart an die Leistungsanforderung angepasst werden, dass der Medienverbrauch optimiert wird. Indem dem zweiten Durchtritt eine mittels des Aktuators steuerbare Blende zugeordnet wird, ist es darüber hinaus möglich, den Feuchtehaushalt des Brennstoffzellenstapels dynamisch zu steuern.

Die Blende kann vorzugsweise vor dem Durchtritt oder in dem Durchtritt angeordnet sein.

Die Blende kann dabei dieselbe Querschnittsform wie der erste Durchtritt und/oder der zweite Durchtritt aufweisen, insbesondere ist es vorteilhaft, wenn die Blende elliptisch gebildet ist. Dies ermöglicht eine einfache Fertigung und eine gute Abdeckung des Durchtritts. In einer alternativen Ausführungsform ist es möglich, dass die Querschnittsform der Blende polygon, d.h. beispielsweise rechteckig, quadratisch, hexagonal, orthogonal oder dreieckig gebildet ist. Weiterhin kann die Blende auch in Richtung des Durchtritts oder entgegen des Durchtritts gebogen gebildet sein.

Die Blende kann dabei dieselbe Querschnittsform wie der erste Durchtritt und/oder der zweite Durchtritt aufweisen, insbesondere ist es vorteilhaft, wenn die Blende elliptisch gebildet ist. Dies ermöglicht eine einfache Fertigung und eine gute Abdeckung des Durchtritts.

In diesem Zusammenhang ist es bevorzugt, wenn die Blende mittels eines Aktuators innerhalb der zweiten Teilkammer verschiebbar, d.h. translatierbar gelagert ist zur Einstellung eines Strömungsquerschnitts des Durchtritts. Alternativ kann Blende drehbar am oder im Durchtritt gelagert sein.

Weiterhin ist es sinnvoll, wenn die Querschnittsfläche der zweiten Teilkammer annähernd der Querschnittsfläche der Blende entspricht. Dies ermöglicht eine optimale Führung der Blende innerhalb der zweiten Teilkammer. Weiterhin können der Blende oder der zweiten Teilkammer auch Dichtungslippen zugeordnet sein zur Abdichtung der zweiten Teilkammer gegenüber dem Medium.

Um eine einfache Fertigung der Bipolarplatte zu erreichen ist es bevorzugt, wenn der verjüngte Strömungsquerschnitt zwischen der ersten Teilkammer und der zweiten Teilkammer durch mindestens eine hervorstehende Nase gebildet ist. Die Nase ist somit als Teil der Bipolarplatte gebildet und kann in demselben Fertigungsschritt wie die Bipolarplatte entstehen. In anderen Worten sind keine zusätzlichen Fertigungsschritte für die Ausbildung der zweiten Teilkammer und der ersten Teilkammer vonnöten. Dies verringert die Komplexität des Bauteils und reduziert den Materialbedarf, sodass eine Kostenreduktion erreicht wird.

Weiterhin ist es von Vorteil, wenn der verjüngte Strömungsquerschnitt zwischen der ersten Teilkammer und der zweiten Teilkammer durch zwei gegenüberliegende hervorstehende Nasen gebildet ist. Dies führt zu einer symmetrischen Ausbildung der Medienführung und reduziert die Komplexität der Bipolarplatte.

Insbesondere ist es vorteilhaft, wenn die Nase eine Führungsschiene für die Blende bildet. Weiterhin ist es bevorzugt, wenn beide Nasen eine Führungsschiene für die Blende bilden.

Zur einfachen Regulierung des Feuchtegehalts innerhalb einer Brennstoffzelle ist es von Vorteil, wenn auch der andere der Medienführungen eine erste Teilkammer und eine den Durchtritt aufweisende zweite Teilkammer umfasst, wenn zwischen der ersten Teilkammer und der zweiten Teilkammer ein Strömungsquerschnitt der Medienführung verjüngt ausgebildet ist und wenn in die zweite Teilkammer eine zweite Blende einsetzbar oder eingesetzt ist.

In diesem Zusammenhang ist es sinnvoll, wenn die zweite Blende mittels eines Aktuators innerhalb der zweiten Teilkammer verstellbar gelagert ist zur Einstellung eines Strömungsquerschnitt des Durchtritts. Dies ermöglicht die Führung des Mediums und die Einstellung des Medienmassenstroms auch durch die andere Medienführung. Die zweite Blende kann dabei ebenfalls mittels des Aktuators innerhalb der zweiten Teilkammer verschiebbar, d.h. translatierbar gelagert sein. Weiterhin ist es von Vorteil, wenn die Verjüngung der anderen Medienführung durch mindestens eine zwischen der ersten Teilkammer und der zweiten Teilkammer hervorstehenden Nase gebildet ist. Oder durch zwei gegenüberliegende, hervorstehende Nasen gebildet ist. Die beschriebenen vorteilhaften Ausbildungen der Blende, gelten dabei auch für die zweite Blende.

Weiterhin ist es möglich, dass die Querschnittsfläche der zweiten Teilkammer der ersten Medienführung sich von der Querschnittsfläche der zweiten Teilkammer der zweiten Medienführung unterscheidet. Alternativ oder zusätzlich kann sich auch die Querschnittsfläche der gesamten ersten Medienführung von der Querschnittsfläche der zweiten Medienführung unterscheiden. Dies führt ebenfalls zu einer Anpassung der Führung des Mediums durch Ausbildung eines Druckgefälles.

Der Brennstoffzellenstapel zeichnet sich insbesondere dadurch aus, dass einer Mehrzahl von in einer Stapelrichtung übereinander gestapelten Brennstoffzellen vorgesehen ist, die mindestens eine Bipolarplatte und eine Membranelektrodenanordnung aufweist. Das Stapeln der Brennstoffzellen und der Bipolarplatten bildet einen sich in Stapelrichtung erstreckenden Medienraum,. Analog bilden die übereinander gestapelten zweiten Teilkammern ebenfalls einen dreidimensionalen Raum, in den die Blende eingesetzt oder einsetzbar ist, um den Strömungsquerschnitt des Durchtritts anzupassen. Insbesondere ist es vorteilhaft, wenn die Blende in oder entgegen der Stapelrichtung verstellbar gelagert ist, dies ermöglicht eine dynamische Anpassung des Strömungsquerschnitts der Durchtritte und damit eine dynamische Anpassung des Medienmassenstroms. Die für die Bipolarplatte beschriebenen Vorteile und Ausgestaltungen gelten analog auch für den Brennstoffzellenstapel mit mindestens einer Bipolarplatte.

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in der Figur nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnung. Dabei zeigt:

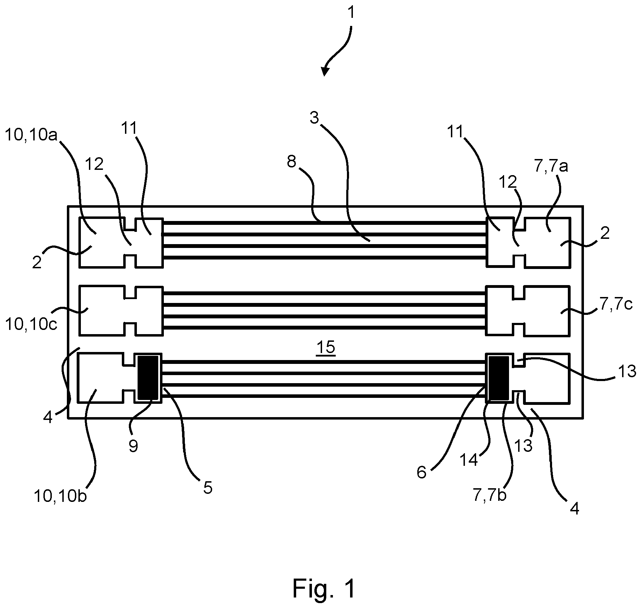

- Fig. 1: eine schematische Darstellung der Bipolarplatte.

Figur 1 zeigt eine Bipolarplatte 1 für eine Brennstoffzelle mit einem aktiven Bereich 3 und einem den aktiven Bereich 3 umgebenden Randbereich 4. Der Randbereich 4 weist drei als erste Medienports gebildete erste Medienführungen 10, nämlich einen Medienport zur Zuführung des ersten Reaktanten 10a, einen Medienport zur Zuführung des zweiten Reaktanten 10b und einen Medienport zur Zuführung des Kühlmittels 10c in den aktiven Bereich 3 der Bipolarplatte 1 auf. Weiterhin sind drei als zweite Medienports gebildete zweite Medienführungen 7 vorhanden, nämlich ein Medienport 7a zur Abfuhr des ersten Reaktanten ein Medienport 7b zur Abfuhr des zweiten Reaktanten und ein Medienport 7c zur Abfuhr des Kühlmittels. Zwischen der ersten Medienführung 10 und der zweiten Medienführung 7 sind über den aktiven Bereich 3 verlaufende Medienkanäle 8 vorhanden, die ein jeweils ein Flussfeld für das betreffende Betriebsmedium bilden.

Die ersten Medienführungen 10 weisen eine Mehrzahl von ersten Durchtritten 5 auf. Die zweiten Medienführungen 7 weisen mehrere zweite Durchtritte 6 auf. Weiterhin ist eine Mehrzahl von Medienkanälen 8 ausgebildet, die durch den aktiven Bereich 3 der Bipolarplatte 1 verlaufen. Die Medienkanäle 8 verbinden strömungsmechanisch die ersten Durchtritte 5 der ersten Medienführungen 10 mit den zweiten Durchtritten 6 der jeweiligen zweiten Medienführungen 7. Die Medienkanäle 8 sind in der Figur 1 vereinfacht dargestellt. So sind die Medienkanäle 8 vorzugsweise als ein Medienkanalnetz gebildet, welches bevorzugt mäanderförmig durch den aktiven Bereich 3 der Bipolarplatte 1 verläuft. Insbesondere verlaufen die Medienkanäle 8 auf einer Seite offen, um die aktiven Bereiche der zu der Bipolarplatte 1 benachbarten Schichten mit den Medien zu versorgen. Die ersten Durchtritte 5 und die zweiten Durchtritte 6 sind innerhalb eines Bipolarplattenkörpers 15 ausgebildet, so dass die Durchtritte 5,6 die Bipolarplatte 1 untertunneln.

Die ersten Medienführungen 10 weisen eine erste Teilkammer 2 und eine den Durchtritt 5 aufweisende zweite Teilkammer 11 auf. Zwischen der ersten Teilkammer 2 und der zweiten Teilkammer 11 ist der Strömungsquerschnitt der ersten Medienführung 10 verjüngt ausgebildet. In anderen Worten ist zwischen der ersten Teilkammer 2 und der zweiten Teilkammer 11 ein Medienführungskanal 12 mit einem reduzierten Strömungsquerschnitt angeordnet. In die zweite Teilkammer 11 ist eine Blende 9 einsetzbar oder eingesetzt. Vorliegend ist die Blende 9 mittels eines Aktuators innerhalb der zweiten Teilkammer 11 verschiebbar gelagert, so dass durch die Verschiebung der Blende 9 der Strömungsquerschnitt des oder der Durchtritte 5 angepasst werden kann. Die Querschnittsfläche der zweiten Teilkammer 11 entspricht dabei annähernd der Querschnittsfläche der Blende 9, so dass eine erhöhte Kontaktfläche der Blende 9 mit den Durchtritten 5 erreicht wird, um eine entsprechende Medienabdichtung zu erzielen.

Zur einfacheren Fertigung der Bipolarplatte 1 sind die Medienführungskanäle 12, oder der verjüngte Strömungsquerschnitt zwischen der ersten Teilkammer 2 und der zweiten Teilkammer 11, durch zwei gegenüberliegende, hervorstehende Nasen 13 gebildet, die der Übersicht halber nur in einem der zweiten Medienführungen 7 gekennzeichnet ist. Die Nasen 13 sind folglich in dem Bipolarplattenkörper 15 selber ausgebildet. Die beiden Teilkammern 2, 11 und der Medienführungskanal 12 der jeweiligen Medienführung 10, 7 können dadurch in einem einzigen Fertigungsschritt gefertigt werden. Die Nasen 13 bilden dabei eine Führungsschiene für die Blende 9, so dass diese ohne zusätzliche Führungs- oder Fixierungselemente entlang der zweiten Teilkammer 11 verschoben werden kann.

Das Ausführungsbeispiel von Figur 1 zeigt darüber hinaus, dass auch zumindest einer der zweiten Medienführungen 7 eine erste Teilkammer 2 und eine die Durchtritte 6 aufweisende zweite Teilkammer 11 umfasst. Zwischen der ersten Teilkammer 2 und der zweiten Teilkammer 11 ist der Strömungsquerschnitt der zweiten Medienführung 7 verjüngt ausgebildet. In die zweite Teilkammer ist ebenfalls eine zweite Blende 14 einsetzbar oder eingesetzt. Auch die zweite Blende 14 ist mittels eines Aktuators innerhalb der zweiten Teilkammer 11 verstellbar, insbesondere verschiebbar gelagert, um den Strömungsquerschnitt des Durchtritts 6 einstellen zu können. Bevorzugt ist in allen zweiten Teilkammern 11 der ersten Medienführung 10 eine Blende 9 eingesetzt, die mittels eines Aktuators verstellbar ist. Es ist die Möglichkeit gegeben, dass zusätzlich in allen zweiten Teilkammern 11 der zweiten Medienführungen 10 eine Blende 14 eingesetzt ist, die mittels eines Aktuators verstellbar ist.

In der Ausführungsform nach Figur 1 entspricht die Querschnittsfläche der zweiten Teilkammer 11 der ersten Medienführung 10 der Querschnittsfläche der zweiten Teilkammer 11 der zweiten Medienführung 7. In einem alternativen Ausführungsbeispiel können sich die Querschnittsflächen der zweiten Teilkammern 11 allerdings auch unterscheiden, was zu einer zusätzlichen Regelmöglichkeit der Medienzuführung und Medienabführung führt.

Die in Figur 1 beschriebene Bipolarplatte 1 kann in einen eine Mehrzahl von in einer Stapelrichtung übereinander gestapelten Brennstoffzellen aufweisenden Brennstoffzellenstapel integriert werden. Hierzu wird zwischen je zwei solcher Bipolarplatten 1 eine Membranelektrodenanordnung platziert, um diese mit über die Flussfelder der Bipolarplatten 1 mit den Reaktanten zu versorgen. Durch dieses Stapeln entsteht ein im Wesentlichen parallel zur Stapelrichtung verlaufender Medienraum. Der Medienraum bildet eine sich in Stapelrichtung erstreckende dreidimensionale zweite Teilkammer 11, in die eine gemeinsame Blende 9, 14 eingesetzt und verstellbar gelagert ist. Dies ermöglicht eine dynamische Führung und Regelung der Medien innerhalb des Brennstoffzellenstapels.

### BEZUGSZEICHENLISTE

- 1: Bipolarplatte
- 2: erste Teilkammer
- 3: aktiver Bereich
- 4: Randbereich
- 5: erster Durchtritt
- 6: zweiter Durchtritt
- 7: zweite Medienführung
- 7a: zweiter Medienport für ersten Reaktant
- 7b: zweiter Medienport für zweiten Reaktant
- 7c: zweiter Medienport für Kühlmittel
- 9: Blende
- 10: erste Medienführung
- 10a: erster Medienport für ersten Reaktant
- 10b: erster Medienport für zweiten Reaktant
- 10c: erster Medienport für Kühlmittel
- 11: zweite Teilkammer
- 12: Medienführungskanal
- 13: Nase
- 14: zweite Blende
- 15: Bipolarplattenkörper

## Patentansprüche

1. Bipolarplatte (1) für eine Brennstoffzelle mit einem aktiven Bereich (3) und einem den aktiven Bereich (3) umgebenden Randbereich (4), dem eine mit einem ersten Durchtritt (5) strömungsmechanisch verbundene erste Medienführung (10) und eine mit einem zweiten Durchtritt (6) strömungsmechanisch verbundene zweite Medienführung (7) zugeordnet ist, sowie mit einem durch den aktiven Bereich (3) verlaufenden, den ersten Durchtritt (5) mit dem zweiten Durchtritt (6) strömungsmechanisch verbindenden Medienkanal (8), **dadurch gekennzeichnet, dass** zumindest einer der Medienführungen (10,7) eine erste Teilkammer (2) und eine den Durchtritt (5,6) aufweisende zweite Teilkammer (11) umfasst, dass zwischen der ersten Teilkammer (2) und der zweiten Teilkammer (11) ein Strömungsquerschnitt der Medienführung (10,7) verjüngt ausgebildet ist, und dass in die zweite Teilkammer (11) eine Blende (9) einsetzbar oder eingesetzt ist.

2. Bipolarplatte (1) nach Anspruch 1, **dadurch gekennzeichnet, dass** die Blende (9) mittels eines Aktuators innerhalb der zweiten Teilkammer (11) verstellbar gelagert ist zur Einstellung eines Strömungsquerschnitts des Durchtritts (5,6).

3. Bipolarplatte (1) nach Anspruch 1 oder 2, **dadurch gekennzeichnet, dass** die Blende (9) mittels eines Aktuators innerhalb der zweiten Teilkammer (11) verschiebbar gelagert ist zur Einstellung eines Strömungsquerschnitts des Durchtritts (5,6).

4. Bipolarplatte (1) nach einem der Ansprüche 1 bis 3, **dadurch gekennzeichnet, dass** der verjüngte Strömungsquerschnitt zwischen der ersten Teilkammer (2) und der zweiten Teilkammer (11) durch mindestens eine hervorstehende Nase (13) gebildet ist.

5. Bipolarplatte (1) nach einem der Ansprüchen 1 bis 4, **dadurch gekennzeichnet, dass** der verjüngte Strömungsquerschnitt zwischen der ersten Teilkammer (2) und der zweiten Teilkammer (11) durch zwei gegenüberliegende, hervorstehende Nasen (13) gebildet ist.

6. Bipolarplatte (1) nach Anspruch 4 oder 5, **dadurch gekennzeichnet, dass** die Nase (13) eine Führungsschiene für die Blende (9) bildet.

7. Bipolarplatte (1) nach einem der Ansprüche 1 bis 6, **dadurch gekennzeichnet, dass** auch die andere der Medienführungen (7,10) eine erste Teilkammer (2) und eine den Durchtritt (5,6) aufweisende zweite Teilkammer (11) umfasst, dass zwischen der ersten Teilkammer (2) und der zweiten Teilkammer (11) ein Strömungsquerschnitt der Medienführung (7,10) verjüngt ausgebildet ist und dass in die zweite Teilkammer (11) eine zweite Blende (14) einsetzbar oder eingesetzt ist.

8. Bipolarplatte (1) nach Anspruch 7, **dadurch gekennzeichnet, dass** die zweite Blende (14) mittels eines Aktuators innerhalb der zweiten Teilkammer (11) verstellbar gelagert ist zur Einstellung eines Strömungsquerschnitts des Durchtritts (5,6).

9. Bipolarplatte (1) nach Anspruch 7 oder 8, **dadurch gekennzeichnet, dass** sich die Querschnittsfläche der zweiten Teilkammer (11) der ersten Medienführung (10) von der Querschnittsfläche der zweiten Teilkammer (11) der zweiten Medienführung (7) unterscheidet.

10. Brennstoffzellenstapel, der aus einer Mehrzahl von in einer Stapelrichtung übereinander gestapelten Brennstoffzellen gebildet ist, die mindestens eine Bipolarplatte nach einem der Ansprüche 1 bis 9 und eine Membranelektrodenanordnung aufweist.

## Claims

1. A bipolar plate (1) for a fuel cell with an active region (3) and an edge region (4) surrounding the active region (3), with which a first media guide (10) connected fluidically to a first passage (5) and a second media guide (7) connected fluidically to a second passage (6) are associated, and with a media channel (8) running through the active region (3) and fluidically connecting first passage (5) to the second passage (6), **characterized in that** at least one of the media guides (10, 7) comprises a first partial chamber (2) and a second partial chamber (11) having the passage (5, 6), **in that** a flow cross-section of the media guide (10, 7) is tapered between the first partial chamber (2) and the second partial chamber (11), and **in that** an orifice (9) can be inserted or is inserted into the second partial chamber (11).

2. The bipolar plate (1) according to claim 1, **characterized in that** the orifice (9) is adjustably mounted by means of an actuator within the second partial chamber (11) for setting a flow cross-section of the passage (5, 6).

3. The bipolar plate (1) according to claim 1 or 2, **characterized in that** the orifice (9) is displaceable mounted by means of an actuator within the second partial chamber (11) for adjusting a flow cross-section of the passage.

4. The bipolar plate (1) according to any one of claims 1 to 3, **characterized in that** the tapered flow cross-section between the first partial chamber (2) and the second partial chamber (11) is formed by at least one protruding lug (13).

5. The bipolar plate (1) according to any one of claims 1 to 4, **characterized in that** the tapered flow cross-section between the first partial chamber (2) and the second partial chamber (11) is formed by two opposing, protruding lugs (13).

6. The bipolar plate (1) according to claim 4 or 5, **characterized in that** the lug (13) forms a guide rail for the orifice (9).

7. The bipolar plate (1) according to any one of claims 1 to 6, **characterized in that** also the other of the media guides (7, 10) comprises a first partial chamber (2) and a second partial chamber (11) having the passage (5, 6), **in that** a flow cross section of the media guide (7, 10) is tapered between the first partial chamber (2) and the second partial chamber (11), and **in that** a second orifice (14) can be inserted or is inserted into the second partial chamber (11).

8. The bipolar plate (1) according to claim 7, **characterized in that** the second orifice (14) is adjustably mounted by means of an actuator within the second partial chamber (11) for setting a flow cross-section of the passage (5, 6).

9. The bipolar plate (1) according to claim 7 or 8, **characterized in that** the cross-sectional area of the second partial chamber (11) of the first media guide (10) differs from the cross-sectional area of the second partial chamber (11) of the second media guide (7).

10. A fuel cell stack formed of a plurality of fuel cells stacked one above the other in a stacking direction, which comprise at least one bipolar plate according to any one of claims 1 to 9 and a membrane electrode arrangement.

## Revendications

1. Plaque bipolaire (1) pour une pile à combustible avec une zone active (3) et une zone de bord (4) entourant la zone active (3), à laquelle sont associés un premier guidage de fluide (10) relié fluidiquement à un premier passage (5) et un second guidage de fluide (7) relié fluidiquement à un second passage (6), ainsi qu'avec un canal de fluide (8) reliant fluidiquement le premier passage (5) au second passage (6), s'étendant par la zone active (3), **caractérisée en ce qu'**au moins un des guidages de fluide (10, 7) comprend une première chambre partielle (2) et une seconde chambre partielle (11) présentant le passage (5, 6), **en ce qu'**une section transversale d'écoulement du guidage de fluide (10, 7) est réalisée de manière rétrécie entre la première chambre partielle (2) et la seconde chambre partielle (11), et **en ce qu'**un obturateur (9) est ou peut être inséré dans la seconde chambre partielle (11).

2. Plaque bipolaire (1) selon la revendication 1, **caractérisée en ce que** l'obturateur (9) est logé de manière réglable au moyen d'un actionneur à l'intérieur de la seconde chambre partielle (11) pour le réglage d'une section transversale d'écoulement du passage (5, 6).

3. Plaque bipolaire (1) selon la revendication 1 ou 2, **caractérisée en ce que** l'obturateur (9) est logé de manière coulissante au moyen d'un actionneur à l'intérieur de la seconde chambre partielle (11) pour le réglage d'une section transversale d'écoulement du passage (5, 6).

4. Plaque bipolaire (1) selon l'une quelconque des revendications 1 à 3, **caractérisée en ce que** la section transversale d'écoulement rétrécie est formée entre la première chambre partielle (2) et la seconde chambre partielle (11) par au moins un nez (13) en saillie.

5. Plaque bipolaire (1) selon l'une quelconque des revendications 1 à 4, **caractérisée en ce que** la section transversale d'écoulement rétrécie est formée entre la première chambre partielle (2) et la seconde chambre partielle (11) par deux nez (13) en saillie, opposés.

6. Plaque bipolaire (1) selon la revendication 4 ou 5, **caractérisée en ce que** le nez (13) forme un rail de guidage pour l'obturateur (9).

7. Plaque bipolaire (1) selon l'une quelconque des revendications 1 à 6, **caractérisée en ce que** l'autre des guidages de fluide (7, 10) comprend aussi une première chambre partielle (2) et une seconde chambre partielle (11) présentant le passage (5, 6), **en ce qu'**une section transversale d'écoulement du guidage de fluide (7, 10) est réalisée de manière rétrécie entre la première chambre partielle (2) et la second chambre partielle (11) et **en ce qu'**un second obturateur (14) est ou peut être inséré dans la seconde chambre partielle (11).

8. Plaque bipolaire (1) selon la revendication 7, **caractérisée en ce que** le second obturateur (14) est logé de manière réglable au moyen d'un actionneur à l'intérieur de la seconde chambre partielle (11) pour le réglage d'une section transversale d'écoulement du passage (5, 6).

9. Plaque bipolaire (1) selon la revendication 7 ou 8, **caractérisée en ce que** la surface de section transversale de la seconde chambre partielle (11) du premier guidage de fluide (10) se distingue de la surface de section transversale de la seconde chambre partielle (11) du second guidage de fluide (7).

10. Empilement de piles à combustible qui est formé d'une pluralité de piles à combustible empilées les unes au-dessus des autres dans un sens d'empilement qui présente au moins une plaque bipolaire selon l'une quelconque des revendications 1 à 9 et un agencement d'électrode de membrane.
